(19) Europäisches Patentamt
European Patent Office
Office européen des brevets

(11) **EP 3 864 282 B1**

(12) **EUROPÄISCHE PATENTSCHRIFT**

(45) Veröffentlichungstag und Bekanntmachung des Hinweises auf die Patenterteilung:
**07.06.2023   Patentblatt 2023/23**

(21) Anmeldenummer: **19786301.2**

(22) Anmeldetag: **07.10.2019**

(51) Internationale Patentklassifikation (IPC):
**F03D 1/06** (2006.01)    **F16F 7/01** (2006.01)
**F16F 15/023** (2006.01)

(52) Gemeinsame Patentklassifikation (CPC):
**F03D 1/0675; F16F 7/01; F16F 15/023;**
F03D 13/35; F05B 2260/964; F16F 2222/04;
F16F 2222/12; Y02E 10/72; Y02P 70/50

(86) Internationale Anmeldenummer:
**PCT/EP2019/077109**

(87) Internationale Veröffentlichungsnummer:
**WO 2020/074455 (16.04.2020 Gazette 2020/16)**

(54) **ROTORBLATT EINER WINDKRAFTANLAGE MIT EINER TEILCHENDÄMPFUNGSEINRICHTUNG UND EIN HERSTELLUNGSVERFAHREN DAFÜR**

ROTOR BLADE OF A WIND POWER PLANT WITH A PARTICLE DAMPING DEVICE AND METHOD FOR PRODUCING SAME

PALE DE ROTOR D'UNE ÉOLIENNE COMPRENANT UN DISPOSITIF D'AMORTISSEMENT DE PARTICULES ET PROCÉDÉ DE FABRICATION ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2018   DE 102018007953**

(43) Veröffentlichungstag der Anmeldung:
**18.08.2021   Patentblatt 2021/33**

(73) Patentinhaber: **Siemens Gamesa Renewable Energy Service GmbH**
**20097 Hamburg (DE)**

(72) Erfinder:
• **MATHIS, Lukas**
  **24119 Kronshagen (DE)**
• **PREVITALI, Francesco**
  **22525 Hamburg (DE)**

(74) Vertreter: **Groth, Wieland**
**Patentanwalt**
**Zippelhaus 4**
**20457 Hamburg (DE)**

(56) Entgegenhaltungen:
WO-A1-02/084114        US-A1- 2004 108 732
US-A1- 2010 021 303        US-A1- 2010 209 247

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Rotorblatt einer Windkraftanlage. Die Erfindung betrifft auch ein Verfahren zur Herstellung eines Rotorblattes einer Windkraftanlage.

Rotorblätter für Windkraftanlagen sind im Stand der Technik natürlich hinlänglich bekannt.

Rotorblätter moderner Windkraftanlagen werden zunehmend länger und schlanker. Das führt insbesondere hinsichtlich ihres Schwingungsverhaltens zu Problemen, denn je länger die Rotorblätter werden, desto kritischer werden Schwingungseffekte. Schwingungen haben Einfluss auf die Dimensionierung des Rotorblattes, da bspw. Lastwechsel zu Materialermüdung und sogar zu Ermüdungsbrüchen führen können. Damit vorgegebene Standzeiten erfüllt werden, müssen die tragenden Strukturen des Rotorblattes entsprechend stärker und schwerer dimensioniert werden.

Im Vergleich zur aerodynamischen Dämpfung in Flap-Richtung eines Rotorblattes ist die aerodynamische Dämpfung in Edge-Richtung infolge der geringen Querschnittsfläche senkrecht zur Edge-Richtung gering. Es ist daher wünschenswert, wenn insbesondere in Edge-Richtung eine hohe Strukturdämpfung vorhanden ist.

In der US 2010/0021303 A1 ist ein Rotorblatt einer Windkraftanlage offenbart, mit einer Teilchendämpfungseinrichtung, die an der Spitze des Rotorblattes angeordnet ist.

In der US 2004/0108732 A1 ist ein Rotorblatt einer Windkraftanlage offenbart, bei der entlang der Rotorblattschale Sensoren vorgesehen sind, welche die Belastung des Rotorblattes während des Betriebes messen.

Üblicherweise werden Belastungen für das Rotorblatt infolge von Schwingungen durch den Einsatz von Strukturmaterialien reduziert.

Durch den Einsatz von stabilisierendem Strukturmaterial steigt die Rotorblattmasse, wodurch wiederum die Belastungen für das Rotorblatt selber sowie die Windturbinen erhöht werden.

Es ist daher Aufgabe der vorliegenden Erfindung, ein Rotorblatt zur Verfügung zu stellen, das einen Schwingungsdämpfungsmechanismus aufweist sowie ein Verfahren zur Herstellung eines solchen Rotorblattes zur Verfügung zu stellen.

Die Aufgabe wird in ihrem ersten Aspekt durch ein eingangs genanntes Rotorblatt mit den Merkmalen des Anspruchs 1 erfüllt.

Die Erfindung beruht auf der Idee, das Prinzip einer Teilchendämpfungseinrichtung in einem Rotorblatt vorzusehen, das zumindest eine Kavität mit einen Innenraum begrenzenden Innenwandungen aufweist, wobei in dem Innenraum beweglich gegenüber den Innenwandungen ein Medium angeordnet ist.

Bei dem Medium kann es sich um separate Teilchen handeln. Das sind in diesem Zusammenhang vorzugsweise Kugeln, die einzeln beweglich sind.

Bei dem Medium kann es sich aber auch um Teilchen handeln, die in einem hochviskosen Medium mit einer Viskosität von beispielsweise 1 Pa s eingebracht sind. Es sind auch andere Medien denkbar.

Unter einer Kavität wird hier ein Hohlraum verstanden, der vorzugsweise vollständig von Innenwandungen umgeben ist, zumindest überwiegend von Innenwandungen umgeben ist. Die Innenwandungen können geschlossene oder auch siebartige Flächen sein. Die Innenwandungen und der Innenraum der Kavität sind so ausgebildet, dass das Medium während des Betriebs, aber auch während des Stillstandes des Rotorblattes nicht aus der Kavität herauslaufen oder -fallen kann, sondern das Medium dauerhaft bevorratet.

Die Schwingungsenergie des Rotorblattes wird durch die erfindungsgemäße Teilchendämpfungseinrichtung in Wärme umgewandelt. Der Umwandlungsvorgang wird hier Dissipation genannt. Die Dissipation umfasst sowohl die Umwandlung von Schwingungsenergie in Wärmeenergie durch Bewegung der Teilchen in einem hochviskosen Medium als auch den Fall der Umwandlung von Schwingungsenergie des Rotorblattes in Wärme durch Reibung der Teilchen an den Innenwandungen und/oder durch nichtelastische Stöße an den Innenwandungen oder untereinander.

Es hat sich gezeigt, dass die Schwingung des Rotorblattes durchaus bis zu 20 % der Rotorblattlänge betragen kann oder sogar darüber hinausgehen kann.

Grundsätzlich kann die zu dämpfende Schwingungsfrequenz durch die Auswahl der Partikel und der Innenwände gesteuert werden. Es können auch Partikel aus verschiedenen Materialien verwendet werden, um ein breites Frequenzband zu dämpfen. Es sind auch Kombinationen von der Teilchendämpfung mit hochviskosem Medium und ohne hochviskoses Medium denkbar.

Vorzugsweise weist die Teilchendämpfungseinrichtung eine Mehrzahl an Kavitäten mit jeweils einer Innenwandung, in der jeweils das Medium angeordnet ist, das jeweils gegenüber der Innenwandung beweglich angeordnet ist, auf.

Die Kavität bzw. die Mehrzahl an Kavitäten können an verschiedenen Stellen des Rotorblattes angeordnet sein und untereinander verschieden ausgeformt sein. Während der Rotation des Rotorblattes werden die Teilchen durch die Zentrifugalkraft in der Kavität gegen eine radial äußere Innenwandung der Kavität gedrückt, wobei sich "radial" auf den Radius des durch die Rotation des Rotors beschriebenen Kreises bezieht.

In einer Ausführungsform der Erfindung erstrecken sich die Kavitäten entlang einer Breite des Rotorblattes von der Vorderkante zur Hinterkante, und sie sind vorzugsweise nebeneinander entlang einer Rotorblattdicke angeordnet. Sie können entlang der Längsrichtung eine Länge von einigen Zentimetern bis Metern aufweisen. Sie können vorzugsweise in einem Abstand von zwei Dritteln der Länge des Rotorblattes von der Rotorblattwurzel aus angeordnet sein. Dabei sind die Teilchen in der Kavität frei zwischen Vorder- und Hinterkante beweglich und können besonders günstig Schwingungsenergie der Schwingungen in Edge-Richtung dissipieren. Dabei nehmen die Teilchen durch Reibung an der radial äußeren Innenwandung Schwingungsenergie auf. Die Dissipation entsteht aber auch durch Viskosität und Kollisionen der Teilchen untereinander

Die Kavitäten erstrecken sich vorzugsweise über die gesamte Dicke des Rotorblattes, so dass bei Schwingungen in Flap-Richtung, also entlang der Dicke des Rotorblattes, während des Betriebes eine Reibung zwischen den Teilchen und den seitlichen Innenwandungen auftritt, die die Schwingung durch Dissipation dämpft.

In einer anderen Ausführungsform der Erfindung erstrecken sich die Kavitäten entlang einer Dicke des Rotorblattes, und sie sind vorzugsweise nebeneinander entlang der Rotorblattbreite angeordnet.

Sie weisen wiederum eine Länge in Längsrichtung von wenigen Zentimetern bis Dezimetern auf. Diese Ausführungsform der Kavität eignet sich insbesondere für die Teilchendämpfung in Flap-Richtung, also zur Dämpfung von Schwingungen, die zwischen Saug- und Druckseite des Rotorblattes hin und her verlaufen.

Auch hier werden die Teilchen in Betrieb gegen die radial äußere Innenwandung jeder der Kavitäten gedrückt, und beim Auftreten von Flap-Schwingungen reiben die Teilchen wiederum an der Innenwandung der Kavität und dissipieren die Flap-Schwingungsenergie. Die Dissipation entsteht aber auch durch Viskosität und Kollisionen. Besonders bevorzugt können die Kavitäten zwischen zwei Stegen, insbesondere zwischen zwei Hauptstegen, angeordnet sein. Sie können aber auch nebeneinander, über die gesamte Breite des Rotorblatts angeordnet sein. Zwischen den Stegen können die Kavitäten entlang der Breite ausgerichtet oder entlang der Dicke ausgerichtet sein. Das heißt die Kavität hat eine längste Ausdehnung entlang der Breite bzw. der Dicke des Rotorblattes, so dass die Teilchen entlang der längsten Ausdehnung besonders weit schwingen können. Im ersten Fall sind sie zur Edge-Dämpfung und im zweiten Fall zur Flap-Dämpfung vorgesehen.

In einer besonders bevorzugten Ausführungsform der Erfindung ist die Mehrzahl an Kavitäten in einem sich wiederkehrenden Muster angeordnet, bspw. in Form eines Honigwabenmusters, wobei die Kavitäten länglich ausgebildet sind und jeweils entlang der Dicke oder der Breite verlaufen und in einem Querschnitt senkrecht zur Dicke oder zur Breite das genannte regelmäßige Muster, bspw. das Honigwabenmuster, aufweisen.

Besonders bevorzugt ist eine Trimmmasse des Rotorblattes als Medium ausgebildet. Die Trimmmasse ist vorzugsweise ebenfalls beweglich in dem Innenraum der Kavität angeordnet. Üblicherweise weisen die Rotorblätter einer Windkraftanlage nach ihrer Herstellung nicht exakt das gleiche Gewicht auf. Um Unwuchten bei der Rotation des Rotors zu vermindern, werden die unterschiedlichen Gewichte durch sogenannte Trimmmassen ausgeglichen. Dazu werden an vorgesehenen Stellen innerhalb des Rotorblattes Kavitäten vorgesehen, in denen eine entsprechende Trimmmasse angeordnet ist.

Erfindungsgemäß wird die Trimmmasse als Teil der Teilchendämpfungseinrichtung genutzt. Die Masse wird nicht wie in herkömmlicher Weise positionsfest und in sich starr relativ zum Rotorblatt angeordnet, sondern als bewegliches Medium ausgebildet, das beweglich gegenüber den Innenwandungen der Kavität angeordnet ist. Üblicherweise sind Trimmmassen an einer einem anderen Steg zugewandten Stegseite vorgesehen oder zwischen einem Steg und einer Rotorblatthinterkante. Es sind jedoch auch andere Positionen für Trimmmassen denkbar.

Die Aufgabe wird in ihrem zweiten Aspekt durch ein Verfahren mit den Merkmalen des Anspruchs 9 gelöst.

Das erfindungsgemäße Verfahren zur Herstellung eines teilchengedämpften Rotorblattes eignet sich zur Herstellung einer der oben genannten Rotorblätter. Umgekehrt können die oben genannten Rotorblätter in einem der nachfolgenden Verfahren hergestellt werden.

Erfindungsgemäß wird ein Innenraum des Rotorblattes mit wenigstens einer Kavität mit innenraumbegrenzenden Innenwandungen ausgestattet, und in die wenigstens eine Kavität wird ein gegenüber den Innenwandungen bewegliches Medium eingefüllt. Bei dem Medium kann es sich, wie oben erwähnt, um separate Teilchen handeln oder um ein hochviskoses Medium, das Teilchen enthält. Die Teilchen können gleiche oder unterschiedliche Größen aufweisen, es sind vorzugsweise Kugeln. Besonders bevorzugt wird eine Mehrzahl an Kavitäten im Innenraum des Rotorblattes angeordnet und jede der Kavitäten mit dem Medium befüllt.

Günstigerweise werden die Gewichte von Teilchen verschiedener Rotorblätter einer Windkraftanlage in ihren Gewichten derart bestimmt, dass alle Rotorblätter dasselbe Gewicht haben.

Besonders bevorzugt wird eine Trimmmasse des Rotorblattes ermittelt und die Trimmmasse als Medium ausgebildet, das für die Teilchendämpfungseinrichtung verwendet wird.

Die Erfindung wird anhand von vier Ausführungsbeispielen in dreizehn Figuren beschrieben. Dabei zeigen:

Fig. 1   eine Schnittansicht eines erfindungsgemäßen Rotorblattes mit einer Flapteilchendämpfung in einer ersten Ausführungsform,

Fig. 2   eine Schnittansicht eines erfindungsgemäßen Rotorblattes einer zweiten Ausführungsform mit einer Flapteilchendämpfung,

Fig. 3   eine perspektivische Ansicht der in Fig. 1 und Fig. 2 verwendeten Kavitäten einer Wabenanordnung,

Fig. 4 ein erfindungsgemäßes Rotorblatt einer dritten Ausführungsform mit als Trimmmasse verwendeten Teilchen,

Fig. 5 eine Schnittansicht eines erfindungsgemäßen Rotorblattes einer vierten Ausführungsform ebenfalls mit als Trimmmasse verwendeten Teilchen,

Fig. 6 eine grafische Darstellung einer Schwingungsamplitude des Teilchens in Abhängigkeit von einem Reibungskoeffizienten und einer Schwingungsamplitude des Rotorblattes bei einer ersten Umdrehungszahl,

Fig. 7 eine grafische Darstellung einer Schwingungsamplitude des Teilchens in Abhängigkeit von einem Reibungskoeffizienten und einer Schwingungsamplitude des Rotorblattes bei einer zweiten Umdrehungszahl,

Fig. 8 eine grafische Darstellung einer dissipierten Leistung pro Maßeinheit in Abhängigkeit von einem Reibungskoeffizienten und einer Schwingungsamplitude des Rotorblattes bei einer ersten Umdrehungszahl,

Fig. 9 eine grafische Darstellung einer dissipierten Leistung pro Maßeinheit in Abhängigkeit von einem Reibungskoeffizienten und einer Schwingungsamplitude des Rotorblattes bei einer zweiten Umdrehungszahl,

Fig. 10 Darstellung einer Dämpfung $\delta$ gegenüber der Amplitude $y_0$ für verschiedene Reibungskoeffizienten $\mu$ bei einer Drehzahl von U=6,30 min$^{-1}$,

Fig. 11 Darstellung der Dämpfung $\delta$ gegenüber der Amplitude $y_0$ für verschiedene Reibungskoeffizienten $\mu$ bei einer Drehzahl von U=9,60 min$^{-1}$,

Fig. 12 Darstellung einer Dämpfung $\delta$ gegenüber der Amplitude $y_0$ für verschiedene Reibungskoeffizienten $\mu$ bei einer Drehzahl von U=6,30 min$^{-1}$,

Fig. 13 Darstellung der Dämpfung $\delta$ gegenüber der Amplitude $y_0$ für verschiedene Reibungskoeffizienten $\mu$ bei einer Drehzahl von U=9,60 min$^{-1}$.

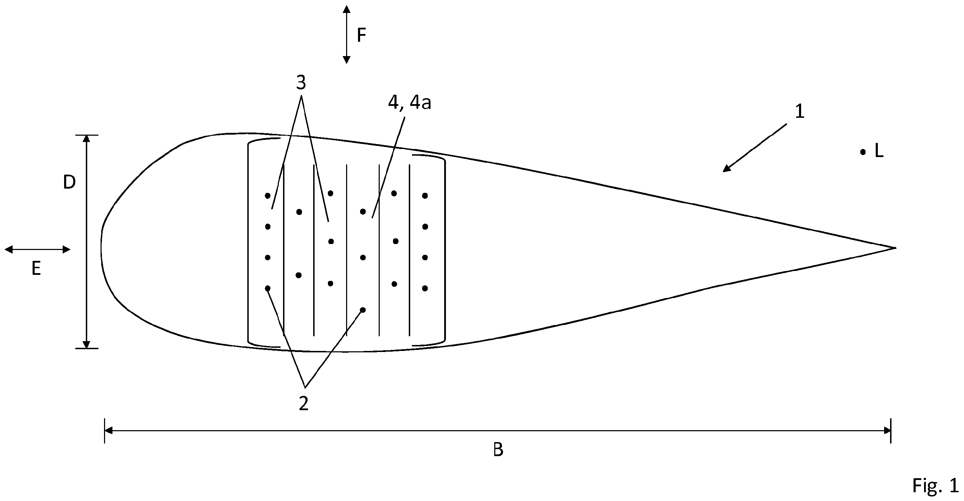

Bei der Dämpfung der Schwingungen eines Rotorblattes 1 unterscheiden wir zwischen Schwingungen in einer Flap-Richtung F, die entlang einer Dicke D des Rotorblattes 1 verläuft und in einer Edge-Richtung E, die entlang einer Breite B des Rotorblattes 1 verläuft. Die beiden Schwingungsrichtungen sind in Fig.1 eingezeichnet.

Schwingungen entlang einer Längsrichtung L des Rotorblattes 1 werden hier vernachlässigt. Das Prinzip einer Teilchendämpfung beruht darauf, dass Teilchen 2 in einer Kavität 3 beweglich gegenüber Innenwandungen 4 der Kavität 3 angeordnet sind. Unter Kavität 3 wird hier ein geschlossener Raum grundsätzlich beliebiger Größe und Innenausdehnung verstanden. Die Form der Kavität 3 kann innen in jedem Schnitt im Prinzip beliebig sein.

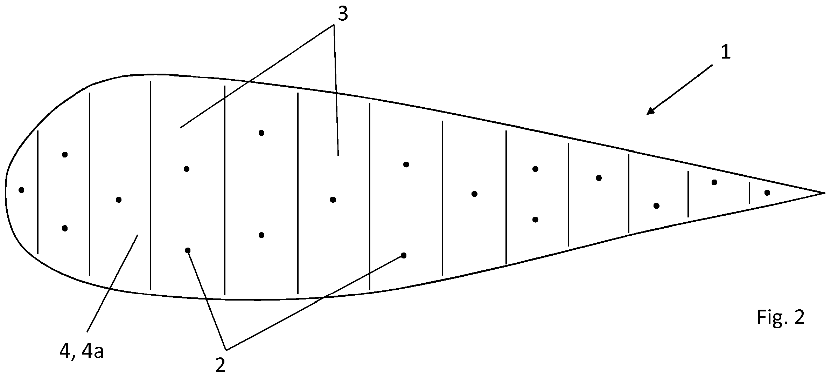

Die Kavitäten 3 können nur zwischen zwei Hauptgurten gemäß Fig. 1 vorgesehen sein oder gemäß Fig. 2 nebeneinander entlang der gesamten Breite B angeordnet sein.

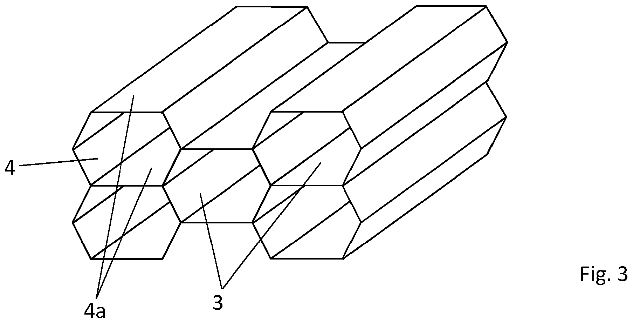

Die Mehrzahl an Kavitäten 3 ist gemäß Fig. 3 in einem wiederkehrenden Muster angeordnet, bspw. in Form eines Honigwabenmusters, wobei die Kavitäten 3 länglich ausgebildet sind und jeweils entlang der Dicke D oder der Breite B verlaufen und in einem Querschnitt senkrecht zur Dicke D bzw. zur Breite B das in Fig. 3 dargestellte regelmäßige Muster, bspw. das Honigwabenmuster, aufweisen.

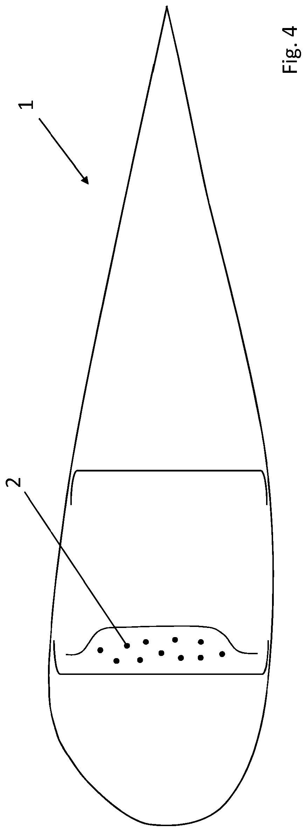

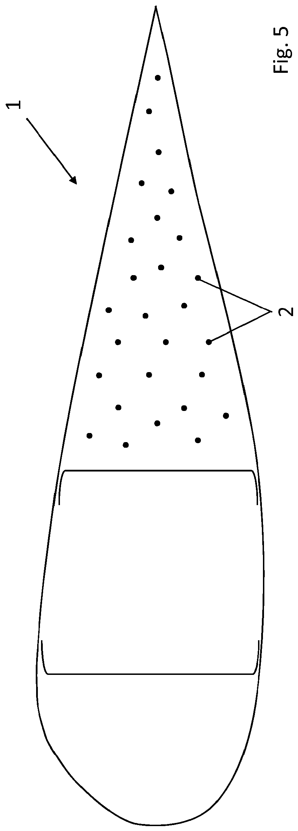

Gemäß Fig. 4 und Fig. 5 ist eine Trimmmasse des Rotorblattes 1 als Medium ausgebildet. Die Trimmmasse ist vorzugsweise ebenfalls beweglich in dem Innenraum der Kavität 3 angeordnet. In Fig. 4 ist die Trimmmasse zwischen den beiden Hauptstegen und in Fig. 5 zwischen dem einen Hauptsteg und einer Rotorblatthinterkante vorgesehen.

Bei einer geringen Drehzahl bildet sich nur eine geringe Zentrifugalkraft in der Kavität 3 aus. Die Teilchen 2 bewegen sich dabei frei in der Kavität 3, und eine Schwingungsdämpfung tritt dadurch ein, dass die Teilchen 2 gegen die Innenwandung 4 und die anderen Teilchen stoßen und die Schwingungsenergie des Rotorblattes 1 dabei aufnehmen.

Für den Fall, dass sich die Drehzahl und damit die Zentrifugalkraft $F_c = a_c * m$ erhöht, werden die Teilchen 2 an die radial äußere Wandung 4a der Kavität 3 gedrückt. Sie ordnen sich dort nebeneinander an und verrutschen auf der radial äußeren Wandung 4a der Kavität 3 durch die Schwingung des Rotorblattes 1 hin und her. Dadurch entsteht Reibung, die Energie aufnimmt und die Schwingung dämmt. Im vorliegenden Fall wird in erster Linie der zweite Dissipationsmechanismus, d. h. die Reibung der Teilchen 2 an der Innenwandung 4 des Rotorblattes 1, betrachtet.

Einfachheitshalber wird, wie eingangs gesagt, die Reibung der Teilchen 2 an der Innenwandung 4 der Kavität 3 als Hauptbeitrag für das Dämpfungssystem in Betrieb, wenn die Windkraftanlage dreht, angesehen. Die Bewegungsgleichung des Teilchens 2 lautet

$$m[\ddot{y}(t) + \ddot{x}(t)] + \mu\, F_n \cdot sign\left(\dot{x}(t)\right) = 0.$$

Dabei ist $y$ die Verformung (Schwingung) des Rotorblattes 1 an der Position, an der System angebracht ist, und x die relative Position des Teilchens 2 im Rotorblatt 1. Das heißt, wenn das Teilchen 2 sich mitbewegt, also zum Beispiel, wenn der Reibungskoeffizient $\mu$ groß ist, ist die relative Bewegung x = 0. Wenn der Reibungskoeffizient klein ist, sich das Teilchen 2 also mit dem Rotorblatt 1 nicht mitbewegt, sondern im Raum stehen bleibt, ist x = - y.

$\mu$ ist der Reibungskoeffizient, m die Masse des Teilchens und $F_n$ die Normalkraft. Die Normalkraft ist in etwa

$$F_n = m \cdot a_c = m \cdot (\omega^2 R \pm g)$$

Die Gleichung wird damit unabhängig von der Masse.

Es ist angenommen, dass die Schwingung des Blattes

$$y(t) = y_o \cdot \sin(2\pi f_e t)$$

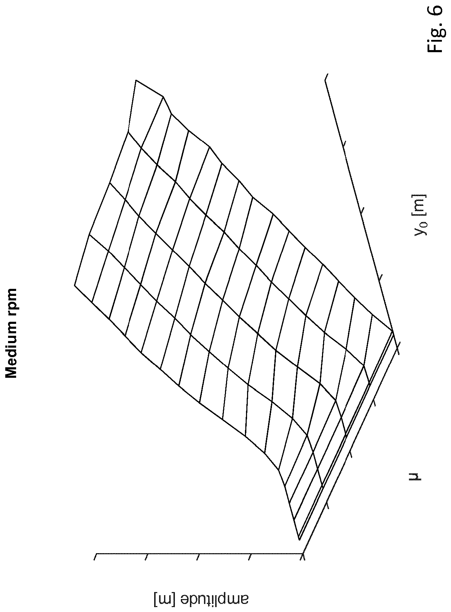

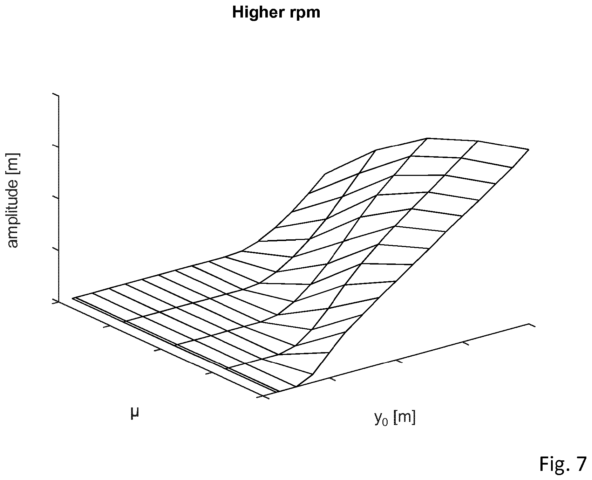

ist, wobei $f_e$ die erste Eigenfrequenz in der Schwingungsrichtung (Edge oder Flap) ist. Die Grafiken Fig. 6 und Fig. 7 zeigen, dass die Amplitude der Teilchen 2 bei hoher Reibung und geringer Amplitude der Rotorblattschwingung gering ist; mit anderen Worten, dass die Teilchen 2 mit dem Rotorblatt 1 mitschwingen. Hier findet keine Dissipation durch Reibung statt.

Die von uns durchgeführte konservative Abschätzung besagt, dass die Dissipation nur von der Reibung zwischen den Teilchen 2 und der Innenwandung 4 der Kavität 3 stammt. Tatsächlich gibt es weitere Mechanismen wie den Zusammenstoß zwischen den Teilchen 2 und zusätzliche Reibung der Teilchen 2 in einem Viskosenmedium usw.

Die Dissipationsenergie pro Rotorumdrehung pro Einheitsmasse beträgt:

$$\frac{E_d}{m} = 4\, x_{ampl} \cdot \mu\, a_c$$

Die dissipative Leistung pro Masseeinheit berechnet sich zu:

$$\frac{W_d}{m} = \frac{E_d}{m \cdot f_e} = \frac{4\, x_{ampl} \cdot \mu\, a_c}{f_e}$$

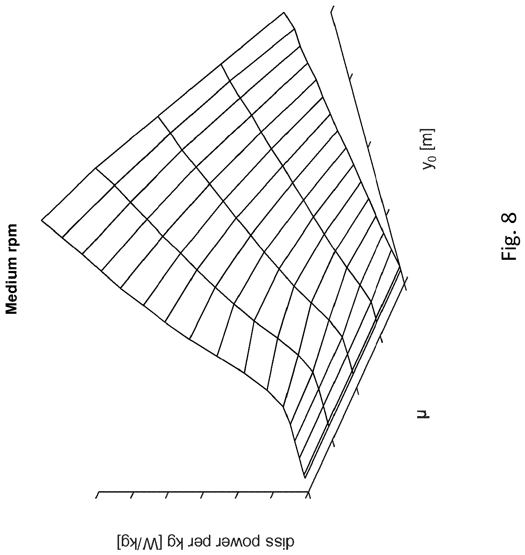

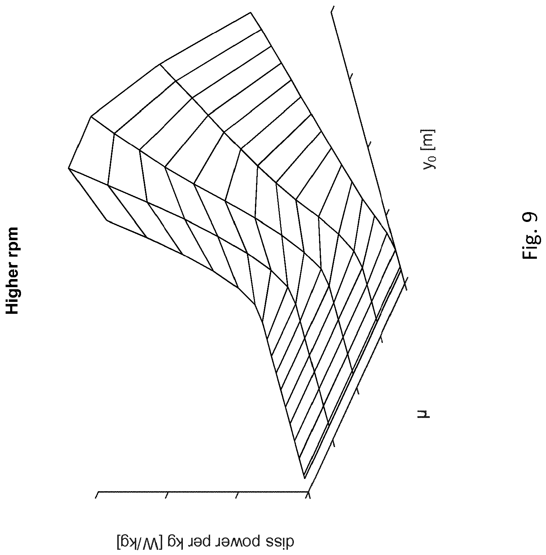

Die Ergebnisse sind in den Graphen in Fig. 8 und Fig. 9 dargestellt.

Die Vibrationsenergie beträgt für die Eigenform:

$$U = \frac{1}{2}(2\pi f_e)^2\, u_e^2 = \frac{1}{2}(2\pi f_e)^2 \left(\frac{y_{sys}}{q_{e\,sys}}\right)^2,$$

wobei $y_{tip}$ die Amplitude der Rotorblattschwingung und $q_i$ die Amplitude der Eigenform ist, ausgewertet an der Position des Dämpfungssystems.

Der Dämpfungsfaktor kann als logarithmisches Dekrement

$$\delta = \ln\frac{y(t)}{y(t+T)}$$

definiert werden, wobei $y$ die Amplitude der Rotorblattschwingung und $T$ die Schwingungsdauer ist.

Das logarithmische Dekrement beträgt auch:

$$\delta = \ln\sqrt{\frac{U}{U - E_d}} = \frac{1}{2}\ln\frac{U}{U - E_d}$$

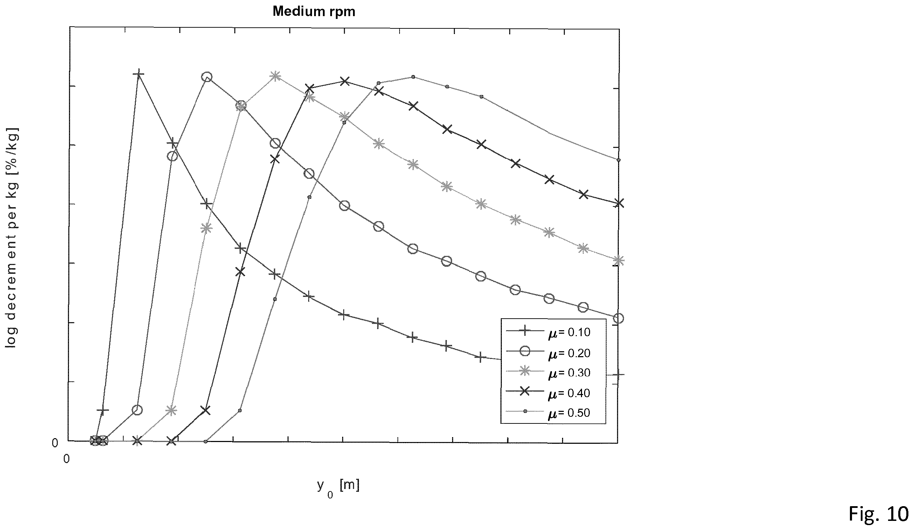

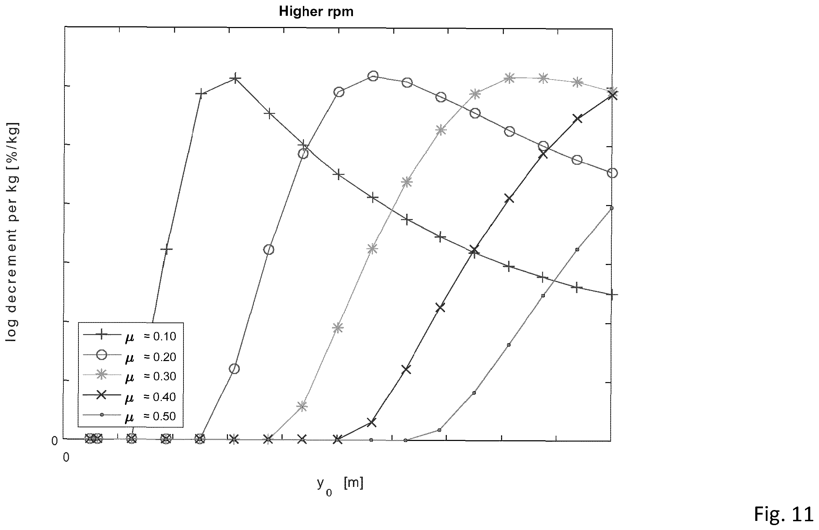

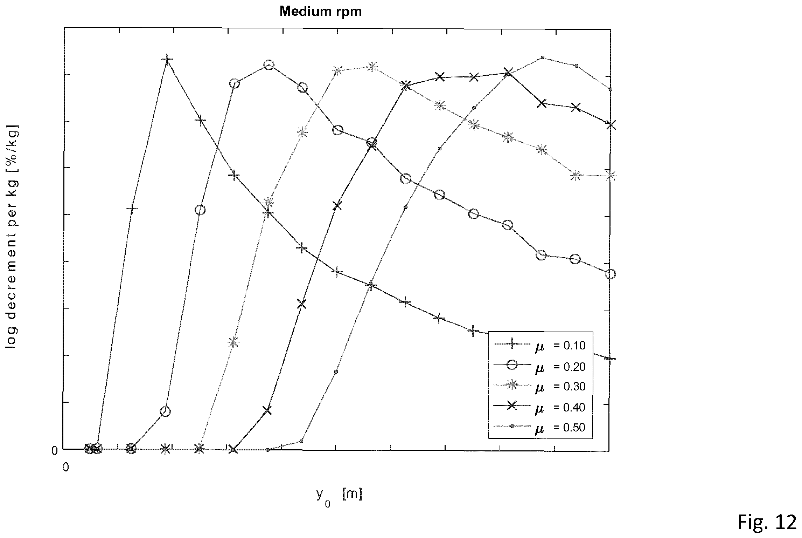

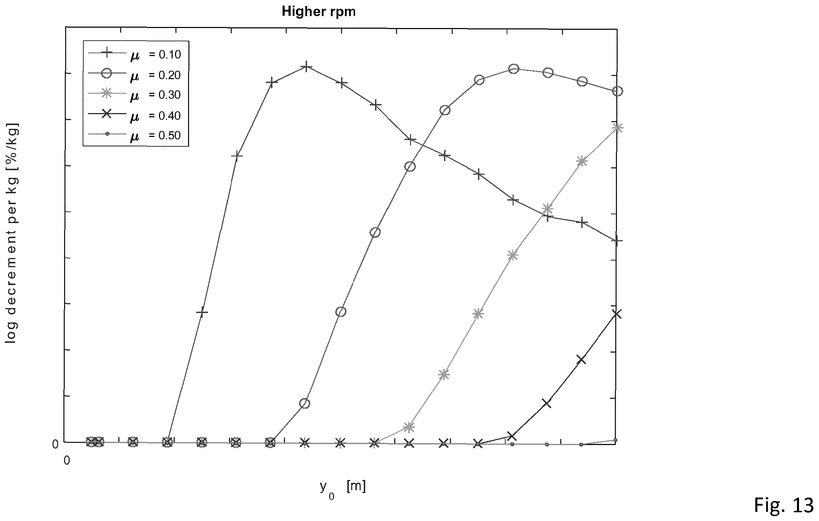

Die Graphen in Fig. 10 und Fig. 11 stellen die Dämpfung $\delta$ gegenüber der Amplitude $y_0$ für verschiedene Reibungskoeffizienten $\mu$ und Drehzahlen U dar. Die Dämpfung $\delta$ ist ein Maß für das Verhältnis zwischen der dissipativen Energie $E_d$ des Teilchendämpfungsmechanismus und der Menge der Energie, die in der Rotorblattschwingung steckt. Die Graphen in Fig. 10 und Fig. 11 zeigen den Zusammenhang bei einer Anordnung des Teilchendämpfungsmechanismus, der bei 100 % der Länge des Rotorblattes 1 vorgesehen ist. In den Graphen in Fig. 12 und Fig. 13 ist der Teilchendämpfungsmechanismus bei 80 % der Länge der Rotorblattes 1 vorgesehen.

Gemäß den vorliegenden Ergebnissen können abhängig vom Rotorblatttyp wenige Kg Teilchen 2 eine Verdoppelung der Edge-Dämpfung der Rotorblätter bewirken.

**Bezugszeichenliste**

| 1 | Rotorblatt |
|---|---|
| 2 | Teilchen |
| 3 | Kavität |
| 4 | Innenwandung |
| 4a | radial äußere Wandung |

| B | Breite |
|---|---|
| D | Dicke |

| E | Edge-Richtung |
|---|---|
| F | Flap-Richtung |

| L | Längsrichtung |

**Patentansprüche**

1. Rotorblatt einer Windkraftanlage mit zumindest einer Teilchendämpfungseinrichtung, mit zumindest einer Kavität (3) mit einen Innenraum begrenzenden Innenwandungen (4) und mit einem in dem Innenraum beweglich gegenüber den Innenwandungen (4) angeordneten Medium, **dadurch gekennzeichnet, dass** sich die Kavitäten (3) entlang einer Breite (B) des Rotorblattes (1) erstrecken und nebeneinander entlang einer Rotorblattdicke angeordnet sind und/oder sich die Kavitäten (3) sich entlang einer Dicke (D) des Rotorblattes (1) erstrecken und nebeneinander entlang der Rotorblattbreite angeordnet sind.

2. Rotorblatt nach Anspruch 1,
**dadurch gekennzeichnet, dass** die Teilchendämpfungseinrichtung eine Mehrzahl an Kavitäten (3) mit jeweils einer Innenwandung (4) aufweist in denen jeweils das Medium angeordnet ist, das jeweils gegenüber der Innenwandung (4) beweglich angeordnet sind.

3. Rotorblatt nach Anspruch 1,
**dadurch gekennzeichnet, dass** das Medium separate Teilchen (2) umfasst.

4. Rotorblatt nach Anspruch 3,
**dadurch gekennzeichnet, dass** die Teilchen (2) Kugeln sind.

5. Rotorblatt nach einem der vorstehenden Ansprüche,
**dadurch gekennzeichnet, dass** die Teilchen (2) in einer viskosen Flüssigkeit angeordnet sind.

6. Rotorblatt nach einem der Ansprüche 1 bis 5,
**dadurch gekennzeichnet**, das die Mehrzahl an Kavitäten (3) zwischen Stegen angeordnet ist.

7. Rotorblatt nach einem der vorstehenden Ansprüche,
**dadurch gekennzeichnet, dass** die Mehrzahl an Kavitäten (3) in einem Querschnitt eine wiederkehrenden Muster, insbesondere Honigwabenstruktur, aufweisen.

8. Rotorblatt nach einem der vorstehenden Ansprüche,
**dadurch gekennzeichnet, dass** eine Trimmmasse beweglich in der Kavität (3) angeordnete Teilchen (2) aufweist.

9. Verfahren zur Herstellung eines teilchengedämpften Rotorblattes (1) nach einem der Ansprüche 1 bis 8, indem
ein Innenraum des Rotorblattes (1) mit wenigstens einer Kavität (3) mit einen Innenraum begrenzenden Innenwandungen (4) ausgestattet wird, in die wenigstens einen Kavität (3) ein gegenüber den Innenwandungen (4) bewegliches Medium eingefüllt werden.

10. Verfahren nach Anspruch 9,
**dadurch gekennzeichnet, dass** separate Teilchen (2) als Medium verwendet werden.

11. Verfahren nach Anspruch 9,
**dadurch gekennzeichnet, dass** eine Mehrzahl an Kavitäten (3) im Innenraum angeordnet wird und jede der Kavitäten (3) mit dem Medium befüllt.

12. Verfahren nach Anspruch 9, 10 oder 11,
**dadurch gekennzeichnet, dass** Gewichte von Teilchen (2) verschiedener Rotorblätter (1) einer Windkraftanlageanlagenlage in ihren Gewichten derart bestimmt, dass alle Rotorblätter (1) dasselbe Gewicht haben.

13. Verfahren nach einem der Ansprüche 9 bis 12,
**dadurch gekennzeichnet, dass** eine Trimmmasse ermittelt wird und als Teilchen (2) der Teilchendämpfungseinrichtung verwendet wird.

**Claims**

1. Rotor blade of a wind turbine with at least one particle damping device having at least one cavity (3) with inner walls (4) delimiting an interior, and with a medium arranged in the interior so as to be movable with respect to the inner walls (4), **characterised in that** the cavities (3) extend along a width (B) of the rotor blade (1) and are arranged next to one another along a thickness of the rotor blade and/or that the cavities (3) extend along a thickness (D) of the rotor blade (1) and are arranged next to one another along the width of the rotor blade.

2. Rotor blade according to claim 1,
**characterised in that** the particle damping device has a plurality of cavities (3) each with an inner wall (4), each of which contains the medium which is arranged movably with respect to the inner wall (4) in each case.

3. Rotor blade according to claim 1,
**characterised in that** the medium comprises separate particles (2).

4. Rotor blade according to claim 3,
**characterised in that** the particles (2) are balls.

5. Rotor blade according to any of the preceding claims,
**characterised in that** the particles (2) are arranged in a viscous fluid.

6. Rotor blade according to any of claims 1 to 5,

**characterised in that** the plurality of cavities (3) are arranged between webs.

7. Rotor blade according to any of the preceding claims, **characterised in that** the plurality of cavities (3) in cross-section have a recurrent pattern, in particular a honeycomb structure.

8. Rotor blade according to any of the preceding claims, **characterised in that** a trimming mass has particles (2) which are arranged so as to be movable in the cavity (3).

9. Method for manufacture of a particle-damped rotor blade (1) according to any of claims 1 to 8, by an interior of the rotor blade (1) being fitted with at least one cavity (3) having inner walls (4) delimiting the interior, a medium which is movable with respect to the inner walls (4) being filled in the at least one cavity (3).

10. Method according to claim 9, **characterised in that** separate particles (2) are used as the medium.

11. Method according to claim 9, **characterised in that** a plurality of cavities (3) are arranged in the interior and each of the cavities (3) is filled with the medium.

12. Method according to claim 9, 10 or 11, **characterised in that** the weights of particles (2) of different rotor blades (1) of a wind turbine are matched in their weights such that all rotor blades (1) have the same weight.

13. Method according to any of claims 9 to 12, **characterised in that** a trimming mass is determined and used as particles (2) of the particle damping device.

**Revendications**

1. Pale de rotor d'une éolienne avec au moins un dispositif d'amortissement de particules avec au moins une cavité (3) avec des parois intérieures (4) qui délimitent un espace intérieur et avec un milieu placé mobile dans l'espace intérieur par rapport aux parois intérieures (4), **caractérisée en ce que** les cavités (3) s'étendent le long d'une largeur (B) de la pale de rotor (1) et sont placées l'une à côté de l'autre le long d'une épaisseur de pale de rotor et/ou que les cavités (3) s'étendent le long d'une épaisseur (D) de la pale de rotor (1) et sont placées l'une à côté de l'autre le long de la largeur de la pale de rotor.

2. Pale de rotor selon la revendication 1, **caractérisée**

**en ce que** le dispositif d'amortissement de particules présente une multitude de cavités (3) avec chacune une paroi intérieure (4), dans chacune desquelles le milieu est placé, qui sont placées chacune mobiles par rapport à la paroi intérieure (4).

3. Pale de rotor selon la revendication 1, **caractérisée en ce que** le milieu comprend des particules séparées (2).

4. Pale de rotor selon la revendication 3, **caractérisée en ce que** les particules (2) sont des billes.

5. Pale de rotor selon l'une des revendications précédentes, **caractérisées en ce que** les particules (2) sont placées dans un liquide visqueux.

6. Pale de rotor selon l'une des revendications 1 à 5, **caractérisées en ce que** la multitude de cavités (3) est placée entre des nervures.

7. Pale de rotor selon l'une des revendications précédentes, **caractérisées en ce que** la multitude de cavités (3) présente, dans une section transversale, un motif qui se répète, en particulier une structure en nid d'abeilles.

8. Pale de rotor selon l'une des revendications précédentes, **caractérisées en ce qu'**une masse d'équilibrage présente des particules (2) placées mobiles dans la cavité (3).

9. Procédé pour la fabrication d'une pale de rotor amortie par des particules (1) selon l'une des revendications 1 à 8, un espace intérieur de la pale de rotor (1) étant équipé d'au moins une cavité (3) avec des parois intérieures (4) qui délimitent un espace intérieur dans au moins une cavité (3) desquelles il est rempli un milieu mobile par rapport aux parois intérieures (4).

10. Procédé selon la revendication 9, **caractérisé en ce que** des particules séparées (2) sont utilisées comme milieu.

11. Procédé selon la revendication 9, **caractérisé en ce qu'**une multitude de cavités (3) est placée dans l'espace intérieur et chacune des cavités (3) est remplie avec le milieu.

12. Procédé selon la revendication 9, 10 ou 11, **caractérisé en ce que** des poids de particules (2) de différentes pales de rotor (1) d'une éolienne sont déterminés dans leurs poids de telle manière que toutes les pales de rotor (1) ont le même poids.

13. Procédé selon l'une des revendications 9 à 12, **caractérisé en ce qu'**une masse d'équilibrage est déterminée et est utilisée en tant que particules (2) du dispositif d'amortissement de particules.

EP 3 864 282 B1

Fig. 1

Fig. 2

Fig. 3

Fig. 4

Fig. 5

Medium rpm

amplitude [m]

$\mu$

$y_0$ [m]

Fig. 6

Fig. 7

Fig. 8

EP 3 864 282 B1

Fig. 9

**Medium rpm**

Fig. 10

Fig. 11

Fig. 12

Fig. 13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100021303 A1
- US 20040108732 A1